Europäisches Patentamt

European Patent Office

Office européen des brevets

(11) Publication number: **0 365 248**
**A2**

## (12) EUROPEAN PATENT APPLICATION

(21) Application number: 89310574.2

(22) Date of filing: 16.10.89

(51) Int. Cl.⁵: **B01D 61/24 , B01J 47/02**

(30) Priority: 14.10.88 IL 88056

(43) Date of publication of application:
**25.04.90 Bulletin 90/17**

(84) Designated Contracting States:
**AT BE CH DE ES FR GB GR IT LI LU NL SE**

(71) Applicant: **BEN-GURION UNIVERSITY OF THE NEGEV RESEARCH AND DEVELOPMENT AUTHORITY**
**P.O. Box 1025**
**Beer-Sheva(IL)**

(72) Inventor: **Vofsi, David**
**50 Hague Street**
**I-34980 Haifa(IL)**
Inventor: **Korngold, Emanuel**
**3 Nadav Street**
**Beer Sheva(IL)**

(74) Representative: **Knott, Stephen Gilbert et al**
**MATHISEN, MACARA & CO. The Coach House 6-8 Swakeleys Road**
**Ickenham Uxbridge Middlesex UB10 8BZ(GB)**

(54) **Process and device for the deionization of ion-containing aqueous solutions.**

(57) The present invention provides a process for the deionization of aqueous ion containing solutions comprising:
circulating an aqueous ion-containing solution within a shell of a deionizing device having an inlet and an outlet port;
simultaneously passing an aqueous acid solution through an assembly of cation-exchange membranes at least partly disposed within the shell; and
simultaneously passing an aqueous alkali solution through an assembly of anion exchange membranes at least partly disposed within the shell;
wherein said aqueous ion-containing solution is deionized while flowing in the shell in contact with the assemblies as anions contained in the solution exchange across the walls of the anion exchange membranes with hydroxyl ions flowing therethrough while cations contained in the solution exchange across the walls of the cation exchange membranes with hydronium ions flowing therethrough. The invention also provides devices for carrying out this process.

Fig.1.

## PROCESS AND DEVICE FOR THE DEIONIZATION OF ION-CONTAINING AQUEOUS SOLUTIONS

The present invention relates to a process and device for the deionization of ion-containing aqueous solutions. More particularly, the present invention relates to the deionization of ion-containing aqueous solutions utilizing cation and anion permeable hollow fibers and membranes.

Ion exchange processes and devices are a long since established art. In its most widely used form, ion exchange is effected by means of columns packed with ion exchange cationic and anionic resins of various kinds. These resins may be used in separate columns, one exchanging the cations from the incoming water to be treated - usually against hydrogen or sodium cations; the second, exchanging the anions, usually against hydroxyl-ions. The resins may also be used in a mixed-bed, both the cation and anion exchange resin particles being placed in a single column.

Exchange of ions in aqueous medium may also be effected by means of suitable ion-exchanging membranes, the best known process effecting such exchange is known as Electrodialysis. Yet another means for an exchange of cations or anions by means of suitably designed membranes is known in the art as Donnan-Exchange or Donnan-Dialysis. Whereas in electrodialysis an electric potential is employed as a moving force for the ions across the membranes, in the case of the Donnan-Exchange, the moving force is the difference in chemical potential between the solutions on each side of the membrane. Thus, for instance, calcium ions contained in a solution on one side of the cation-exchange membrane, may be exchanged against sodium ions contained in a solution on the other side of the membrane under suitable conditions of concentration of these ions in the two solutions.

While these processes and the various devices designed for their application are widely used, they are not devoid of limitations and drawbacks.

In the case of ion exchange by means of packed columns, a limited amount of raw water may be passed through the columns before the resins become exhausted. When this point is reached, the resins have to be regenerated, i.e., restored to their initial form, usually by means of acids and bases. Thus, a strong cation exchange resin is regenerated by a strong acid, whereas the strong anion exchange resin is restored to its initial state by means of a strong alkali solution.

Following this restoration step is the rinsing step, the objective being to remove any excess or held-up acid or alkali on the restored resin and to avoid any acidity or alkalinity in the next batch of water to be treated. Only when the outcoming water in the rinse has achieved a neutral point, is the rinsing discontinued, whereupon the column is considered regenerated and a new ion-exchange cycle can then begin.

In the case of a mixed ion-exchange column, the restoration of the resins to their initial state cannot be effected before the two kinds of resins making up the packing are separated. This separation is usually effected by flotation, since the two kinds of resin differ in their specific gravity. The separated resins are then treated as described above, before they are mixed again and repacked for further use. In any case, the rinsing step requires considerable amounts of deionized water thus causing part of the product water to be wasted in the regeneration of the columns.

While these modes of operation are being practiced in a batchwise ion-exchange process, which is the process most commonly employed, there also exist continuous ion-exchange processes that are being used on a large industrial scale. However, the continuous ion-exchange processes require complicated and very costly equipment and controls, and are not being widely practiced.

To avoid the treatment of acids and bases in the regeneration step of ion exchange resins, there have also been suggested thermal-regeneration resins and a process for effecting such regeneration by heating the resins to a certain temperature. While such resins - known in the art under the name SCIROTHERM - do not require an acid and base treatment for regeneration, and would thus appear to be more economical to use, these systems have not been perfected to the point of becoming commercially practical, and have failed to gain acceptance due to problems of long term stability of the resins and other drawbacks.

The process known as Electrodialysis is free from several of the drawbacks of conventional ion-exchange. It is a continuous process that does not require regeneration, and therefore does not use chemical regenerants. However, the chemicals which are nevertheless used in the preparation step are often quite costly, depending on the kind of water requiring the pretreatment. Moreover, the acknowledged major drawback of electrodialysis is the inevitable mode of the construction of the membrane stack required for the operation.

In order to be economical in use, a multi-membrane stack, often comprising hundreds of membranes, has to be assembled, the stack requiring suitable spacers, elastic packings and flow directing components to avoid channeling, etc. All these components have to be suitably aligned in a device resembling a filter press, and held under static pressure.. To obtain an ion-depleted product of reduced conductivity, the potential across the two electrodes on the device is often of the order of several hundred volts, creating problems of current-leak, short circuiting, etc. Because of this, the process is intrinsically not suitable for achieving highly deionized water on account of the very reduced conductivity of such product-water.

Donnan-Exchange across a membrane is not fraught with the difficulties of electrodialysis, and is being used on a limited scale, particularly in eliminating heavy-metal ions from industrial waste-waters for environmental reasons. Thus, chromium and nickel ions can be effectively exchanged by this means against unharmful monovalent ions, before releasing the waste-water to the environment. However, depending on diffusion of the ions across the membrane, and lacking an electrical driving force, as in the case of electrodialysis, the process is rather slow and not suitable for large-scale de-ionization or for marginal desalination.

In view of the drawbacks of the various de-ionization processes and devices hereinbefore described, large scale de-ionization and marginal desalination is being increasingly conducted by means of the so-called pressure-driven processes known as Reverse Osmosis. In this process the driving force for the water across the membrane is a pressure differential on both sides of the membrane, which is usually, but not necessarily, chemically neutral and non-charged. Not being an ion-exchange process, but rather an ion-exclusion process, it requires no chemicals except those employed in the pre-treatment of the raw-waters, the pre-treatment often accounting for as much as 25 to 30% of the operating costs.

In this process, flat membranes may be used in various modular arrangements, but also hollow fibers made of a suitable material such as cellulose 2.5 - acetate and cellulose tri-acetate, or other materials capable of ion-exclusion may be used.

A well-known embodiment of a hollow fiber device used on a commercial scale in a reverse-osmosis process is the "Permasep" manufactured by the DuPont Company. It employs an assembly of hollow fibers of about 50 microns in outer diameter suitably sealed in an outer shell and capable of withstanding high pressure.

While this and similar devices are devoid of many of the previously mentioned limitations and drawbacks associated with ion-exchange, they suffer from the problems connected with elevated pressure technologies, namely, costly pressure-withstanding modules as well as high pressure compressors and accessories, etc. For this reason they failed to be adapted to smaller scale uses, such as domestic water softening and deionization devices. It is not surprising, therefore, that pressure-driven devices have failed to displace conventional ion-exchange columns in smaller scale operations, which columns in many circumstances remain more economical to operate in spite of their inherent drawbacks.

The object of this invention is to provide a process of water de-ionization and a device therefor, whereby many of the aforementioned drawbacks are ameliorated.

According to the present invention there is now provided a process for the deionization of aqueous ion containing solutions comprising:
circulating an aqueous ion-containing solution within a shell of a deionizing device having an inlet and an outlet port;
simultaneously passing an aqueous acid solution through an assembly of cation-exchange membranes at least partly disposed within said shell; and
simultaneously passing an aqueous alkali solution through an assembly of anion exchange membranes at least partly disposed within said shell;
wherein said aqueous ion-containing solution is deionized while flowing in said shell in contact with said assemblies as anions contained in said solution exchange across the walls of said anion exchange membranes with hydroxyl ions flowing therethrough while cations contained in said solution exchange across the walls of said cation exchange membranes with hydronium ions flowing therethrough.

Thus in one of its embodiments the present invention provides a process for continuous deionization of aqueous, ion containing solutions comprising simultaneously passing an aqueous acid solution through hollow-fibers constructed of a cation-exchanging material and passing an aqeuous alkali solution through hollow fibers constructed of an anion-exchanging material, both these kinds of fibers being suitably incorporated within a vessel, through which an aqueous ion-containing solution is simultaneously passed co-currently, counter-currently or in a cross-current fashion, to produce a product fluid of reduced ion content. Preferably, said aqueous solution is caused to flow countercurrently to the flow of said acid and alkali solution within their respective hollow fibers.

In preferred embodiments of the present invention each of said assemblies of hollow fibers is sealed in its respective inlet and outlet to prevent leakage of solution along the exterior of said fibers.

Furthermore, in preferred configurations of devices according to the present invention, said shell is a tube having an inlet adjacent one end thereof and an outlet adjacent the other end thereof and each of said assemblies is constituted by a bundle of said fibers, which bundles pass through said tube with the end portions of said bundles protruding through the ends of said tube. Preferably the fibers of said bundles are intermingled with each other inside said tube along at least substantial lengths thereof as described hereinafter.

Alternatively in another embodiment of the present invention said cation exchange membranes are in the form of spirally wound flat sheet cation exchange membranes and said anion exchange membranes are in the form of spirally wound flat sheet anion exchange membranes.

The invention also provides a preferred deionization device for carrying out said process comprising:
an outer shell having an inlet and an outlet port for the passage of an aqueous ion-containing solution circulated therethrough;
an assembly of flat-tube cation-exchange membranes at least partly disposed within said shell for the passage of an aqueous acid solution therethrough; and
an assembly of flat-tube anion-exchange membranes at least partly disposed in said shell for the passage of an aqueous alkali solution therethrough;
each of said flat-sheet assemblies having an inlet and outlet end, said inlet ends being separately disposed from each other;
said device further comprising means for confining the flow of said acid and said alkali solutions solely through their respective membrane assemblies;
wherein said aqueous ion-containing solution is deionized while flowing in said shell in contact with said assemblies.

## Background to Hollow-Fiber and Flat-Sheet Spirally-Wound Deionization Devices

Ion exchange hollow fibers are well-known in the art and their preparation is described inter alia in U.S. Patents 3,944,485; 4,045,352; and 4,187,333. Similarly, the use of hollow fibers for many separation procedures is known and described in, e.g., U.S. Patents 3,228,877; 3,186,941; 3.536,611; 3,891,547; 4,187,180; 4,211,597; 4,242,203; 4,293,418; 4,361,481; 4,437,994 and 4,451,369.

None of said patents, however, teach or suggest the process and device of the present invention and the advantages thereof as described herein.

Contrary to conventional column ion-exchange, the process of the invention is a continuous process, using ion-exchange hollow fibers instead of resin particles. It is preferred to use ion-exchange hollow fibers, in a modular arrangement similar to the one employed in reverse osmosis hollow fiber modules, such as the "Permasep". In this preferred embodiment, both kinds of hollow fibers, namely, those of the cation-exchange type and those of the anion-exchange type, are sealed in one shell, thus being analogous to a mixed resin ion-exchange column, without, however, needing any regeneration. In contradistinction to the reverse osmosis hollow-fiber modules, the module of the present invention operates at atmospheric pressure, or very slightly higher pressure, provided by the main's water line where water is the fluid to be deionized. It can thus be directly connected to the water mains.

Also in contradistinction to conventional, or even continuous ion-exchange processes, the process of the invention does not require passing the resinous ion-exchange medium through the cycles of regeneration and rinsing, and is therefore much more economical in operation, both in terms of chemicals and fresh water. It can, therefore, truly be termed maintenance-free, being particularly adapted to smaller scale operation.

The feature, which renders this process, and the devices designed for its performance, distinct from the known process of Donnan Exchange, will become apparent from the following description.

When a solution of acid is caused to flow through a hollow cation-exchange fiber, while water, containing sodium, magnesium, calcium or other ions, is caused to flow co - or counter currently on the outside of this fiber, these cations will exchange across the wall of the fiber, the water becoming depleted of the above cations, by virtue of the Donnan equilibrium being established in the material comprising the hollow fiber.

A similar and symmetrical exchange process will occur with a hollow-fiber constructed from an anion exchange material, through which an alkaline solution will be caused to flow. Through this fiber, anions contained in the water, such as chloride or sulphate, will exchange across the wall of the fiber against the hydroxyl ion, this step in itself also being a consequence of the Donnan equilibrium. However, the simultaneous employment of both types of hollow-fiber in the module herein described, will immediately cause the hydrogen ions emerging from the cationic hollow-fiber, and the hydroxyl-ions emerging from the anionic hollow fiber to neutralize each other, this occurring in a reaction of an extremely high affinity. The effect of this reaction is to sweep the ions appearing on the outer side of both types of fiber, i.e. hydrogen ions at the cationic hollow fiber, and hydroxyl-ions at the anionic one, thus setting up a steep concentration gradient, preventing the formation of any ionic layers that would otherwise cause phenomena known as "concentration polarization", this latter effect being responsible for the slow rate of ion exchange in conventional Donnan Exchange.

When assembling a module with a multiplicity of cation and anion exchange hollow fibers or of flatt-sheet membranes according to the invention, several design features are considered in order to optimize the performance of the device. As the exchange-capacity of the cationic and anionic fibers or flat-sheet membrane material is generally not equal, the two kinds of fiber or membrane preferably will not be incorporated in equal numbers or surface area in the module and their relative number or size preferably will also depend on the relative rate of ion diffusion through both types of fibers or sheet membranes. For a module of given dimensions and total exchange capacity, the maximum product water output per unit time will depend on the desired degree of deionization, providing the flow of acid in the cationic fiber and that of alkali in the anionic one are adjusted so as not to constitute the limiting factor in the ion-exchange process. Same should be taken care-of with the reagent flows within the respective flat-sheet membrane assemblies in the case of the spirally-wound embodiment.

These and similar design considerations and features such as flow distributors, baffles, etc., are well known to those schooled in the art, and do not constitute a part of this invention. Neither is this invention limited by a particular design of the de-ionization module, which may be conceived in various forms, of which the ones provided in the accompanying drawings will serve only to illustrate the basic principle involved in their design.

Ion exchange hollow fiber or flat-sheet membranes, whether of the cation-exchange or anion-exchange type suitable for employment in the process and construction of the devices herein described, may be manufactured from various materials by techniques that are well established in the art. It is understood that the invention is not limited by the use of a particular type of these hollow fiber or flat-sheet membranes, their mode of preparation or dimensions.

In the embodiments of the present invention the cationic ion-exchange hollow fibers consist of polyethylene hollow fibers, chemically modified so as to contain sulfonic-acid groups as part of their molecular structure, while the anionic ion-exchange hollow fibers consist of polyethylene hollow-fibers chemically modified so as to contain quaternary ammonium groups as part of their molecular structure, or consist of polyethylene hollow-fibers, chemically modified so as to contain amino-groups as part of their molecular structure. The flat-sheet membranes being used in other embodments are likewise being produced in the same manner, albeit by slightly different technical procedures.

It is well known that desalination of various feed-waters is being accomplished by Reverse Osmosis (R.O.) using salt rejecting membranes, that are incorporated into devices (modules) of two main types: the hollow-fiber and the spirally-wound modules. Both these modules are designed so as to permit the incorporation of a maximal membane area within a minimal volume.

As stated hereinbefore the present invention is directed also to a process and device utilizing an additional and different type of membrane module, namely, a spirally-wound module constructed from flat-sheet ion-exchange membranes, instead of ion-exchange hollow fibers. The flat-sheet spirally-wound module may in some cases have several advantages over the hollow fiber module. The construction of a hollow-fiber module pre-supposes the availability of a hollow fiber, which is the precursor of the actual ion-exchange hollow-fiber to which it is converted by a suitable reaction - e.g., as described in Israel Specification 52484 - and that is ultimately incorporated into the module.

It is well known that in some cases the spinning of hollow fibers from polymeric materials may prove technically complex and even unattainable, whereas the production of a flat sheet from the same material is more readily accessible. Even when the production of hollow-fibers and flat sheets from a given polymer are equally possible, the conversion of these to an ion-exchange product may be considerably more simple in the case of the flat sheet.

While both, the hollow-fiber as well as the spirally-wound modules, are known and mentioned in several prior patents by way of the general concept involved in their construction, each particular application of such modules calls for specific design features. For instance, in Israeli Patent No. 52484 (Vofsi, Gassner, Jagur) a spirally-wound module is described for the separation of Uranyl-nitrate from a solution containing a multiplicity of other ionic species. While serving this particular purpose, it is totally unsuitable for the purpose of de-salination by ion-exchange.

It is the purpose of the present invention to detail the construction of a spirally-wound module to serve the specific requirements of continuous desalination by means of ion exchange. These details are described in order to illustrate the principal features of the module herein-described, and are not intended to limit the design to these features exclusively.

The spirally-wound module for ion-exchange desalination according to this invention may operate in two different modes, i.e. cross-flow or counter-flow, as described hereinafter.

The invention will now be described in connection with certain preferred embodiments with reference to the following illustrative figures and examples so that it may be more fully understood. It is stressed, however, that the particulars shown and described are by way of example and for purposes of illustrative discussion only. Thus, the following examples which include preferred embodiments will serve to illustrate the practice of this invention and are presented in the cause of providing what is believed to be the most useful and readily understood description of procedures as well as of the principles and conceptual aspects of the invention. Similarly, in this regard no attempt is made to show structural details of the device and its component parts in more detail than is necessary for a fundamental understanding of the invention, the description taken with the drawing making apparent to those skilled in the art how the several forms of the invention may be embodied in practice.

In the drawings:

Fig. 1 is a schematic cross-section view of the overall structure of one embodiment of a deionization device of the present invention.

Fig. 2 is a schematic respective view of a disassembled flat-sheet module.

Fig. 3 is a schematic cross-sectional view of an assembled cross flow module.

Fig. 4a is schematic cross-sectional view of the overall structure of the counterflow flat-sheet module, and

Fig. 4b is an expanded, fragmentary cross-sectional view at AA in Fig. 4a.

## Description of the Hollow-Fiber Module

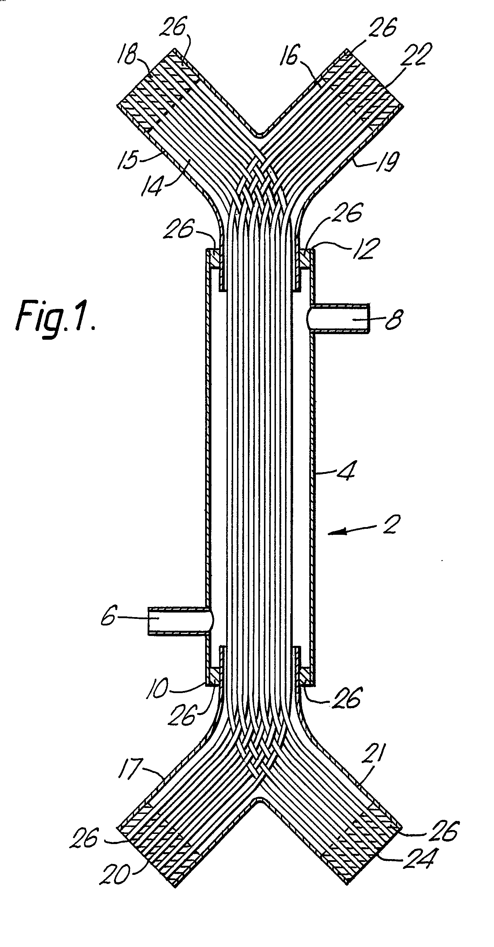

Referring to Fig. 1 there is seen a deionization device of the present invention generally designated in its entirety by reference numeral 2. The device 2 includes an outer shell 4 having an inlet 6 and an outlet port 8 for the passage of an aqueous ion-containing solution circulated therethrough wherein said shell in the embodiment shown is a tube having said inlet 6 adjacent one end 10 of said tube and having said outlet 8 adjacent the other end 12 thereof . The device also includes a first assembly or bundle 14 of cation-exchange permeable hollow fibers at least partly disposed within said shell for the passage of an aqueous acid solution therethrough; and a second assembly or bundle 16 of anion-exchange permeable hollow fibers at least partly disposed in said shell for the passage of an aqueous alkali solution therethrough. Said first assembly 14 enters the device through arm 15 which arm is provided with an inlet 18 and said assembly exits said device through arm 17 provided with outlet 20. Similarly, said second assembly 16 enters the device 4 through arm 19 which arm is provided with an inlet 22 and said assembly 16 exits said device through arm 21 provided with outlet 22. Said inlet and outlet arms 15, 19, 17, 21 protrude through the ends 10, 12 of said shell.

While said assembly inlets 18, 22 are preferably separately disposed from each other to prevent accidental intermixing of the alkali and acidic solutions, said assemblies can exit through separate outlets 20, 24 as shown or through a single outlet if desired. Each of said assemblies 14, 16 is sealed in its respective inlet 18, 22 and outlet 20, 24 to prevent leakage of solution along the exterior of said fibers with epoxy or other suitable resin sealant designated by numeral 26, which is also used to seal ends 12, 14 of the shell at the points of entry and exit of said assemblies.

As also shown, said bundles of fibers 14, 16 are intermingled with each other inside said tube 4 along at least substantial lengths thereof to enhance the deionization process, which process is now further described with reference to the following illustrative examples.

## EXAMPLE 1

Ten anion-exchange hollow-fibers, prepared by sulfochlorination of polyethylene hollow fibers, followed by amination and quaternization, and having a nominal outer diameter of 1 mm, a wall thickness of 0.1 mm, and a total length of 90 cm were introduced through arm 15 and made to exit through arm 17 of the tube 4 shown in Fig. 1, and sealed at both inlets 18,22 by means of a general-purpose liquid epoxy-resin 26. Similarly, twelve cation exchange hollow-fibers introduced through arm 19 and exiting through arm 21 were likewise sealed. Both types of hollow-fibers were prepared according to procedure described in U.S. and adapted for the conversion of polyethylene hollow-fibers, rather than flat membranes. Particular care was taken to dessicate the ends of the fibers, to avoid interference of water with the epoxy sealing.

The exchange capacity of the anion-exchange fiber was 1.1 m. eg./gr., and that of the cation-exchange fiber was 1.3 m.eq./gr.

The tube 4 was then filled with a solution of sodium-chloride having a molar concentration of 0.015, and almost simultaneously, 1 liter of a 0.8 normal solution of sulfuric acid was made to circulate at a rate of 30 liter/hour through the cation-exchange fibers. Likewise, a 0.3 normal solution of sodium-hydroxide was caused to circulate through the anion-exchange hollow-fibers at a rate of 20 liter/hour. The sodium-chloride solution was then caused to flow through the tube, entering at inlet 6 and exiting at outlet 8 at a rate of 30 ml/hour at a rate such that the product water exiting from the outlet 8 had a sodium chloride concentration of 0.002 normal, and a total amount of product water at this concentration of 15 liters was collected.


## EXAMPLE 2

An experiment was performed as described in Example No. 1, causing a 0.05 normal solution of sodium chloride to flow at a rate of 10 ml/hr. The product water exiting from outlet 8 had a sodium chloride concentration of 0.01 N. A total amount of 5 liters product water at this concentration was collected.


## Description of the Cross-Flow Spirally-Wound Module

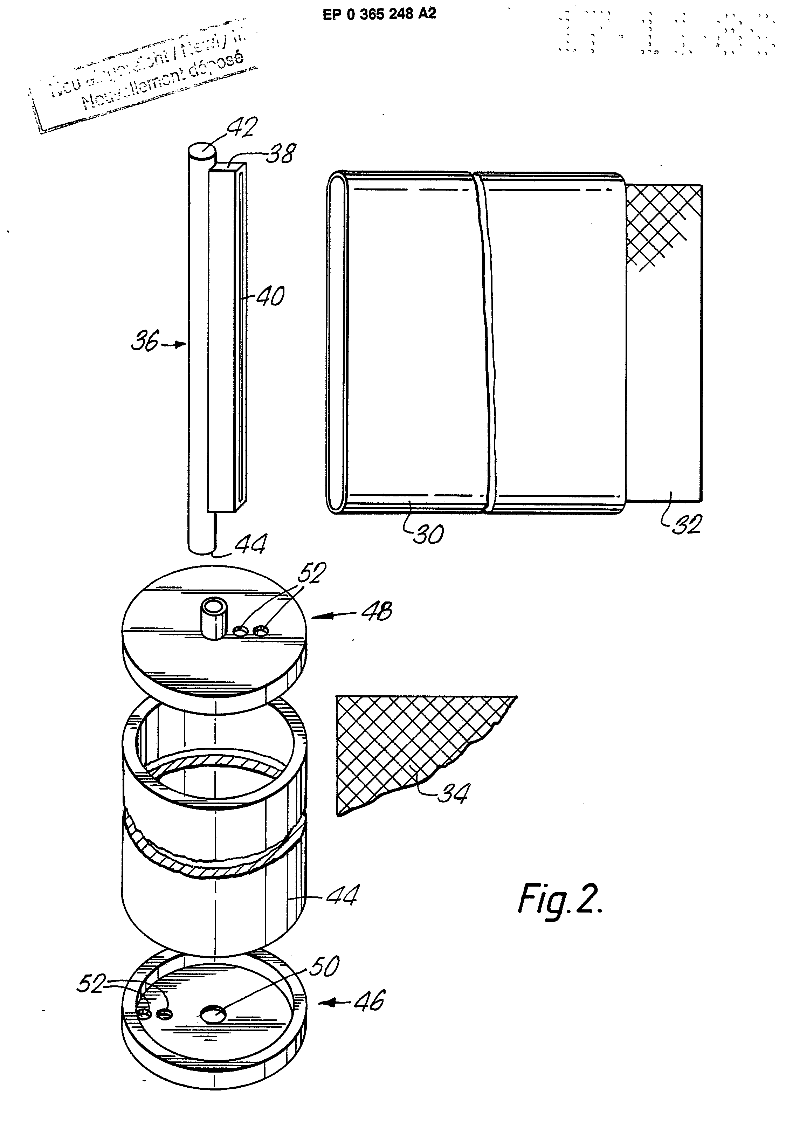

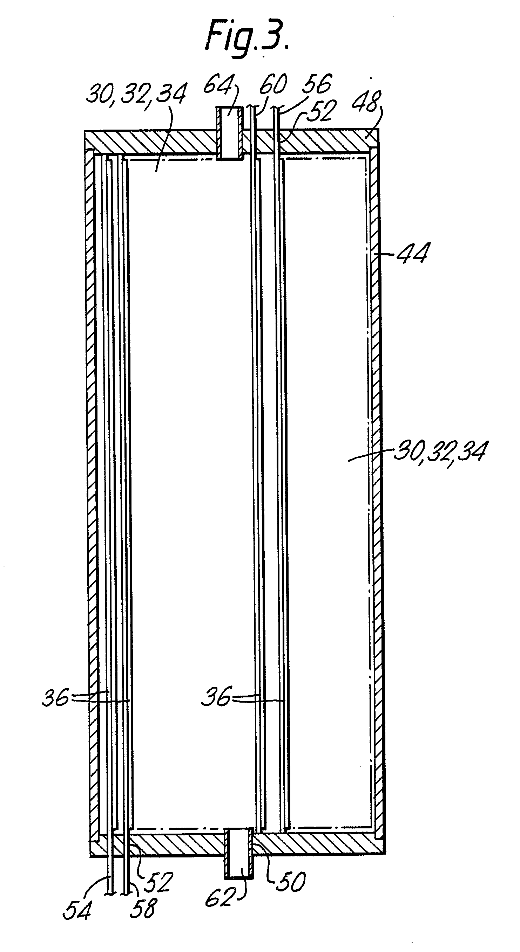

Referring now to Fig. 2, there are seen the cross-flow flat-sheet spirally-wound module components which form the assembled cross-flow module (Fig. 3). The flat tube membrane 30 may have a width in the range 30-300 cm, and a length which is chosen to suit the ion-exchange capacity required. Each module is provided with two flat-tube membranes:

1) a cationic membrane, wherein the tube is composed of polyethylene, modified so as to contain sulfonic acid groups as part of its molecular structure as part of its molecular structure.

2) an anionic membrane, wherein the tube composed of polyethylene chemically modified so as to contain amino-groups or quaternary ammonium groups as part of its molecular structure. The lengths of these two flat-tubes are not necessarily equal, but preferably the ratio between the lengths of the two tubes approximates the ratio of the ion-exchange capacities of the two membrane materials. A strip of netting 32 acts to separate the walls of the flat-tube 30 from each other, when assembled therein. Netting 32 has a width slightly less than the width of flat tube 30, and a length slightly less than the length of flat tube 30. Netting 32 is composed of a plastic inert to the reagent (acid or alkali) intended to flow inside the membrane tube. Typically, netting 32 is made of polyethylene or polypropylene. In a preferred embodiment, however, the netting is made of the same material as the precursor of the membranes (i.e. polyethylene or polypropylene) and subjected to the same chemical treatments during the conversion process hereinbefore described. Similar netting, 34, which need be inert only to the fluid being processed, is used as a spacer and flow-spoiler outside the flat tubes. Each module is equipped with flow gate tubes 36. The tube 36 has a rectangular projection 38 of a length which corresponds to the width of tube 30. At least one aperture 40 appears in the centre wall of projection 38, aperture 40 being in the form of a long slit, or a number of short slits. In another embodiment, aperture 40 takes the form of a large number of small holes arranged in line. One end 42 of header tube 36 is closed, while the opposite end 44 is open and extends a few centimeters beyond projection 38. The material of which header tubes are composed is selected from materials having good chemical resistance to the reagent, acid or alkali, which they are to carry. Typically, such materials include polyethelene, polypropylene, polystyrene and P.V.C.

The outer vessel holding all components comprises a cylindrical shell 44, an inlet flange 46 and a similar outlet flange 48. The height of shell 44 is a little larger than the width of tubing 30, while shell diameter will be a little larger then the diameter of the rolled up tubes 30 together with netting 32 and 34. Shell 44 has a wall thickness sufficient to withstand moderate fluid pressure, such as that found in water supply lines. Suitable materials for the shell are plastics and stainless steel. Inlet flange 46 is configured for leak-tight attachment to shell 44. It is provided with a central water inlet port 50, and two apertures 52 each corresponding to the diameter of header tubes 36. Outlet flange 48 is similar to inlet flange 46, except for the location of apertures 52. Location of apertures 52 is dictated by the geometric requirements of the spirally wound membranes.

Fig. 3 is a sectional view of the cross-flow module as assembled, which shows the inlet and exit sections of the membrane tubes 30, which together with their associated netting form a large spiral having many turns, this spiral having an axis corresponding approximately to the axis of shell 44. All joints are sealed as appropriate and as known in the art, by epoxy, or another suitable resin, or by welding. Each end of tubing 30 is securely sealed to a header tube 36 in a manner allowing free fluid flow throught the aperture 40. One header tube 36 from each tube 30 is sealed through flange 46, in apertures 52, while the remaining header tubes 36 are sealed through flange 48. Flanges 46 and 48 are sealed one at each end to shell 44.

For operation, 6 fluid flow connections are made.

1. An aqueous acid solution reservoir is connected to inlet port 54, which is the inlet to the cation exchange membrane header tube.

2. A spent acid solution tank is connected to receive fluid from port 56, this port being connected to the outlet of the cation exchange membrane header tube.

3. An aqueous alkali solution reservoir is connected to inlet port 58.

4. A spent alkali solution tank is connected to receive fluid from port 60.

5. The fluid to be deionized is connected to port 62.

6. The deionized, product fluid is collected from port 64. Thus the fluid being deionized flows in a direction parallel to the axis of the shell 44, the cross-section of the flowpath being in the form of a scroll as the fluid to be deionized passes the rough of the narrow space between the outsides of the two flat tubes 30.

A flow control valve, or variable volume pump (not shown) may be connected at the entry port 62, so that the desired degree of deionization, or the desired output rate of treated fluid, is obtained.

## Description of the Spirally-Wound Counter-Current Flow Module

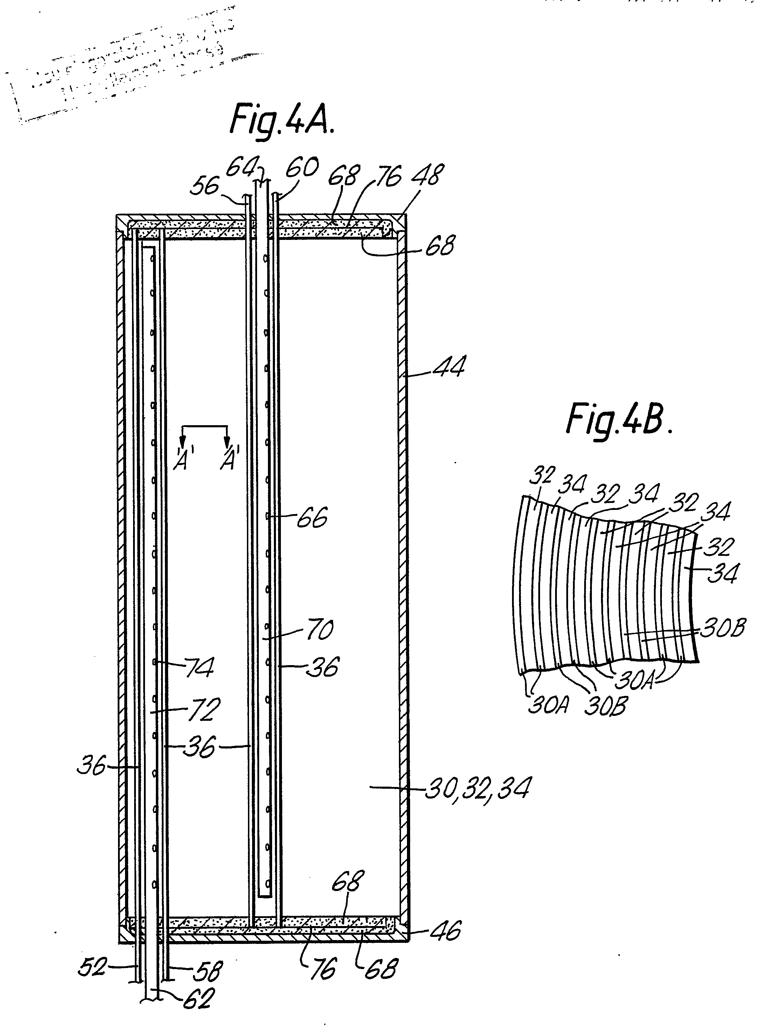

Referring now to Figs. 4A and 4B, there is seen a device which has similarities to that described previously with reference to Fig. 3. In particular, the two flat-tube membranes 30, the netting 32, netting 34 and gate tubes 36 are the same and will not be described again.

The outer vessel holding all components comprises a cylindrical shell 44, an inlet dish flange 46, similar to the "Petri" dish; and a similar outlet dish flange 48. Dish flanges 46, 48 are configured for leak-tight attachment to shell 44.

Both flat-tube membranes 30 and netting 32 and 34 are rolled in the form of a scroll. A fragment in section "AA" of said scroll is shown enlarged in Fig. 4B. To distinguish the two membrane flat tubes 30, the anionic membrane tube is designated 30A and the cationic membrane tube is designated 30B. One strip of netting 32 acts as a spacer inside tube 30A, while a similar strip of netting 32 fulfills the same function inside tube 30B. Netting 34 acts as a spacer between tubes 30A and 30B.

An inlet of part 62 configured for the fluid to be deionized projects beyond the outer face of dish flange 46. Connected to port 62 is a gate tube 72, provided with apertures 74, apertures 74 being in fluid connection with the space between the two membrane tubes 30 adjacent to the outer gate tubes 36. Outlet 64 is similarly connected to the gate tube 70 provided with apertures 66, the tube 70 being at or near the central axis of the device. The scroll, formed by the rolled up membranes 30 and netting 32, 34 has two end faces 76 which are cast in a potting compound 68. Epoxy compounds have been found suitable for this purpose.

In operation, the counterflow module is similar to that of the cross-flow module, except that the fluid to be deionized flows in a spiral path and must traverse the full length of the spiral before reaching the exit port. Consequently a very long fluid flow path is contained in a moderately sized volume, thereby achieving the advantages previously described.

It will be evident to those skilled in the art that the invention is not limited to the details of the foregoing illustrative embodiments and examples and that the present invention may be embodied in other specific forms without departing from the essential attributes thereof, and it is therefore desired that the present embodiments and examples be considered in all respects as illustrative and not restrictive, reference being made to the appended claims, rather than to the foregoing description, and all changes which come with the meaning and range of equivalency of the claims are therefore intended to be embraced therein.

## Claims

1. A process for the deionization of aqueous ion containing solutions comprising:
circulating an aqueous ion-containing solution within a shell of a deionizing device having an inlet and an outlet port;
simultaneously passing an aqueous acid solution through an assembly of cation-exchange membranes at least partly disposed within said shell; and
simultaneously passing an aqueous alkali solution through an assembly of anion exchange membranes at least partly disposed within said shell;
wherein said aqueous ion-containing solution is deionized while flowing in said shell in contact with said assemblies as anions contained in said solution exchange across the walls of said anion exchange membranes with hydroxyl ions flowing therethrough while cations contained in said solution exchange across the walls of said cation exchange membranes with hydronium ions flowing therethrough.

2. A process according to claim 1 wherein said cation exchange membranes are in the form of cation exchange permeable hollow fibers and said anion exchange membranes are in the form of anion exchange permeable hollow fibers.

3. A process according to claim 2, wherein the cationic ion-exchange hollow fibers consist of polyethylene hollow fibers, chemically modified so as to contain sulfonic-acid groups as part of their molecular structure.

4. A process according to claim 2, wherein the anionic ion-exchange hollow fibers consist of polyethylene hollow fibers chemically modified so as to contain quaternary ammonium groups as part of their molecular structure.

5. A process according to claim 2, wherein the anionic ion-exchange hollow fibers consist of polyethylene hollow fibers, chemically modified so as to contain amino-groups as part of their molecular structure.

6. A process for the deionization of aqueous ion containing solutions according to claim 2, wherein said aqueous solution is caused to flow countercurrently to the flow of said acid and alkali solutions within their respective hollow fibers.

7. A process according to claim 1 wherein said cation exchange membranes are in the form of spirally wound flat sheet cation exchange membranes and said anion exchange membranes are in the form of spirally wound flat sheet ion exchange membranes.

8. A process for the deionization of aqueous ion-containing solutions comprising:
circulating an aqueous ion-containing solution within a shell of a deionizing device having an inlet and an outlet port;
simultaneously passing aqueous acid solution through a flat tube cation exchange membrane disposed within said shell; and
simultaneously passing an aqueous alkali solution through a flat tube anion exchange membrane disposed within said shell;
wherein said aqueous ion-containing solution is deionized while flowing in said shell in contact with said flat tubes as anions contained in said solution exchange across the walls of said anion exchange membrane with hydroxyl ions flowing therethrough, while cations contained in said solution exchange across the walls of said cation exchange membrane with hydronium ions flowing therethrough.

9. A process according to claim 8, wherein the cationic ion-exchange flat tube consists of polyethylene, chemically modified so as to contain sulfonic-acid groups as part of its molecular structure.

10. A process according to claim 8, wherein the anionic ion-exchange flat tube consists of polyethylene chemically modified so as to contain quaternary ammonium groups as part of its molecular structure.

11. A process according to claim 8, wherein the anionic ion-exchange flat tube consists of polyethylene chemically modified so as to contain amino-groups as part of its molecular structure.

12. A process for the deionization of aqueous ion-containing solutions according to claim 8, wherein said aqueous solution is caused to flow countercurrently to the flow of said acid and alkali solutions within their respective flat tubes.

13. A process according to claim 8, wherein said aqueous solution is caused to flow in a cross-current team fashion.

14. A device for the deionization of aqueous ion-containing solutions comprising:
an outer shell having an inlet and an outlet port for the passage of an aqueous ion-containing solution circulated therethrough;
an assembly of cation-exchange membranes at least partly disposed within said shell for the passage of an aqueous acid solution therethrough; and
an assembly of anion-exchange membranes at least partly disposed in said shell for the passage of an aqueous alkali solution therethrough;
each of said hollow fiber assemblies having an inlet and an outlet end, said inlet ends being separately disposed from each other;
said device further comprising means for confining the flow of said acid and said alkali solutions solely through their respective membrane assemblies;

wherein said aqueous ion-containing solution is deionized while flowing in said shell in contact with said assemblies.

15. A device according to claim 14 wherein said cation exchange membranes are in the form of cation exchange permeable hollow fibers and said anion exchange membranes are in the form of anion exchange permeable hollow fibers.

16. A device according to claim 14, wherein each of said assemblies of hollow fibers is sealed in its respective inlet and outlet to prevent leakage of solution along the exterior of said fibers.

17. A device according to claim 14, wherein the cationic ion-exchange hollow fibers consist of polyethylene hollow fibers, chemically modified so as to contain sulfuric-acid groups as part of their molecular structure.

18. A device according to claim 14, wherein the anionic ion-exchange hollow fibers consist of polyethylene hollow-fibers, chemically modified so as to contain quaternary ammonium groups as part of their molecular structure.

19. A device according to claim 14, wherein the anionic ion-exchange hollow-fibers consist of polyethylene hollow-fibers, chemically modified so as to contain amino-groups as part of their molecular structure.

20. A device according to claim 14, wherein said shell is a tube having an inlet adjacent one end thereof and an outlet adjacent the other end thereof and each of said assemblies is constituted by a bundle of said fibers, which bundles pass through said tube with the end portions of said bundles protruding through the ends of said tube.

21. A device according to claim 19, wherein the fibers of said bundles are intermingled with each other inside said tube along at least substantial lengths thereof.

22. A device according to claim 14 wherein said cation exchange membranes are in the form of spirally wound flat sheet cation exchange membranes and said anion exchange membranes are in the form of spirally wound flat sheet ion exchange membranes.

23. A device for the deionization of aqueous ion-containing solutions comprising:
an outer shell having an inlet and an outlet port for the passage of an aqueous ion-containing solution circulated therethrough;
a flat tube cation-exchange membrane disposed within said shell for the passage of an aqueous acid solution therethrough; and
a flat tube anion-exchange membrane disposed in said shell for the passage of an aqueous alkali solution therethrough;
each of said flat tube membranes having an inlet and an outlet end, said inlet ends being separately disposed from each other;
said device further comprising means for confining the flow of said acid and said alkali solutions solely through their respective membrane flat-tube assemblies;
wherein said aqueous ion-containing solution is deionized while flowing in said shell in contact with said assemblies.

24. A device according to claim 22, wherein the walls of said flat tubes are held apart by means of a netting inserted into said flat tube, said netting being composed of a material inert to the reagent which, when the device is in use, will flow inside said flat tube.

25. A device according to claim 22, wherein further netting is disposed between said flat tubes, said netting being composed of material inert to the fluid being deionized.

26. A device according to claim 22 wherein the cationic ion-exchange flat tube membrane consist of polyethylene chemically modified so as to contain sulfonic-acid groups as part of its molecular structure.

27. A device according to claim 22 wherein the anionic ion-exchange flat tube membrane consist of polyethylene chemically modified so as to contain quaternary ammonium groups as part of its molecular structure.

28. A device according to claim 22, wherein the anionic ion-exchange flat tube membrane consist of polyethylene chemically modified so as to contain tertiary amino-groups as part of its molecular structure.

29. A device according to claim 22 wherein said shell is a tube having an inlet adjacent one end thereof and an outlet adjacent the other end thereof and where the length ratio between the two flat tube membranes approximates the ratio of the ion-exchange capacity of the two membrane materials.

30. A process according to claim 8, wherein said aqueous solution enters and exits in a direction parallel to the scroll formed by said flat-tube membranes, and where said aqueous solution flows in a scroll-shaped path formed between the outer walls of said flat-tube membranes, said process being referred to as a counter-flow process.

31. A process according to claim 30, wherein the direction of flow of said aqueous solution is opposite to the direction of flow of at least one of the reagents.

32. A device according to claim 23, wherein the membranes are assembled in the form of a scroll, the flat end faces of said scroll being sealed by a potting compound, one part for the solution to be deionized being connected to the central axis of said scroll and the second part being connected to a line on the outer diameter of said scroll, whereby said device is suitable for use for said counter-flow process.

**Fig.1.**

Fig.2.

# Fig.3.

## Fig.4A.

## Fig.4B.